# EUROPÄISCHE PATENTSCHRIFT

(11) **EP 4 397 182 B1**
(45) Veröffentlichungstag und Bekanntmachung des Hinweises auf die Patenterteilung: **24.09.2025**
(21) Anmeldenummer: 23150541.3
(22) Anmeldetag: 06.01.2023
(51) Int. Cl.: A01M 7/00, A01M 21/04

(54) **AGRARFLUID-AUSBRINGSYSTEM**
AGRICULTURAL FLUID DISCHARGE SYSTEM
SYSTÈME D'ÉPANDAGE DE FLUIDE AGRICOLE

(43) Veröffentlichungstag der Anmeldung: 10.07.2024
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-B1- 3 338 547
- GB-A- 2 423 227
- GB-A- 2 571 268
- US-B2- 8 640 972

## Beschreibung

### TECHNISCHES GEBIET DER ERFINDUNG

Die Erfindung betrifft ein Agrarfluid-Ausbringsystem. Agrarfluid-Ausbringsysteme dienen der Ausbringung eines agraren Fluids in der Landwirtschaft oder dem Obst- oder Gemüseanbau, wobei es sich bei dem Fluid beispielsweise um Wasser, Dünger, ein Insektizid oder ein beliebiges anderes Fluid oder Fluidgemisch handeln kann. Die Agrarfluid-Ausbringsysteme verfügen über einen Agrarfluidbehälter, in dem das auszubringende agrare Fluid bevorratet werden kann. Der Agrarfluidbehälter ist über eine Fördereinrichtung, insbesondere eine Pumpe, mit mindestens einer Feldspritzeinrichtung verbunden. Über die Feldspritzeinrichtung kann das agrare Fluid auf eine Agrarfläche ausgebracht werden. Hierzu verfügen übliche Feldspritzeinrichtungen einerseits über ein Ventil zur Steuerung des Durchflusses durch die Feldspritzeinrichtung sowie eine Düse, über die ein Sprühkegel, ein gewünschtes Tropfenmuster oder ein Sprühnebel erzeugt werden kann. Für die Beaufschlagung größerer Flächen mit dem agraren Fluid können mehrere derartige Feldspritzeinrichtungen nebeneinander oder über eine Fläche verteilt angeordnet sein. Vorzugsweise ist das Agrarfluid-Ausbringsystem an einem Traktor oder einem Anhänger oder Anbaugerät montiert. In diesem Fall können mehrere Feldspritzeinrichtungen an einem Sprühbalken in lateraler Fahrrichtung verteilt angeordnet sein, so dass bei fahrendem Traktor die Feldspritzeinrichtung über eine durch die Breite des Sprühbalkens vorgegebene Breite das agrare Fluid ausbringen kann. Während des Betriebs des Agrarfluid-Ausbringsystems steuert eine elektronische Steuereinrichtung den Betrieb der Fördereinrichtung und/oder der mindestens einen Feldspritzeinrichtung, um den Durchfluss, den Druck, das Ausbringverhalten der Feldspritzeinrichtung und damit die Verteilung und Menge des agraren Fluids auf dem Ackerboden entsprechend den Gegebenheiten anzupassen, wobei bei die Umwelt beeinträchtigenden agraren Fluiden die Ausbringmenge so klein wie möglich gehalten werden soll und für den Pflanzenwuchs fördernde agrare Fluide die Ausbringmenge in einem engen vorgegebenen Bereich liegen sollte. Derartige Feldspritzeinrichtungen sind z.B. aus den Dokumenten EP 3 338 547 B1, GB 2 423 227 A, GB 2 571 268 A und US 8 640 972 B2 bekannt.

### AUFGABE DER ERFINDUNG

Der vorliegenden Erfindung liegt die Aufgabe zugrunde, ein Agrarfluid-Ausbringsystem hinsichtlich
- der Betriebssicherheit,
- der Steuerungs- und Regelungsmöglichkeiten,
- des Schutzes vor Verunreinigungen und hierdurch hervorgerufenen Verschleiß und/oder Verstopfungen,
- des Schutzes gegenüber Fehlbedienungen und/oder
- des Ausbringverhaltens
zu verbessern.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Der Erfindung liegt zunächst die Beobachtung zugrunde, dass in Agrarfluid-Ausbringsystemen Verunreinigungen, beispielsweise in Form von Fremdpartikeln, Schlämmen oder ausfällenden Bestandteilen, zu Funktionsbeeinträchtigungen führen können. Lagern sich die Verunreinigungen im Bereich von Ventilkörpern oder Ventilsitzen ab, kann dies dazu führen, dass die Ventile nicht die gewünschte Schließfunktion erfüllen oder ein tatsächlicher Öffnungsquerschnitt von einem Soll-Öffnungsquerschnitt abweicht. Andererseits können die Verunreinigungen zu Beschädigungen der Ventilkörper oder Ventilsitze, von Dichtungen u. ä. führen. Schließlich können sich die Verunreinigungen an beliebigen Strömungsquerschnitten, beispielsweise einem Versorgungsleitungsstrang, ablagern, was zu veränderten Strömungsquerschnitten und damit verbundenen unerwünschten Strömungsverhältnissen führen kann. Aus diesem Grund sind in bekannten Agrarfluid-Ausbringsystemen Filter angeordnet, an denen die Verunreinigungen abgeschieden werden. Die Filter können dann nach vorgegebenen Intervallen oder bedarfsgerecht je nach Ausmaß der Abscheidung ausgetauscht werden oder gespült werden. Die Praxis zeigt allerdings, dass im Betrieb das Agrarfluid-Ausbringsystem trotz des Einsatzes von Filtern nicht hinreichend gegenüber Beeinträchtigungen geschützt ist. In der Praxis werden in dem Agrarfluid-Ausbringsystem nicht agrare Fluide verwendet, denen hinreichend reines Wasser beispielsweise aus einem örtlichen Leitungsnetz hinzugefügt worden ist. Vielmehr wird aus Kosten- und/oder Praktikabilitätsgründen dem agraren Fluid oftmals Wasser zugesetzt, welches einem Brunnen oder Bach entnommen sein kann, womit ein Eintrag von Verunreinigungen, insbesondere Sand, in das Agrarfluid-Ausbringsystem erfolgt, welche dann trotz der Filter zu den genannten Beeinträchtigungen führen oder die Filter verstopfen und/oder beschädigen können.

Erfindungsgemäß wird vorgeschlagen, dass das agrare Fluid auf dem Weg von der Fördereinrichtung zu der Feldspritzeinrichtung (grundsätzlich entsprechend dem Stand der Technik) mittels mindestens eines Filters gefiltert wird. Von dem Filter gelangt allerdings dann das agrare Fluid nicht unmittelbar zu der Feldspritzeinrichtung. Vielmehr ist zwischen dem Filter und der mindestens einen Feldspritzeinrichtung eine Polizeifiltereinrichtung angeordnet.

Eine "Polizeifiltereinrichtung" ist eine aus der allgemeinen Verfahrenstechnik bekannte Einrichtung, die einem Filter oder Abscheider nachgeordnet ist und eine Sicherungsfunktion übernimmt, welche automatisch aktiviert wird, wenn ein vorgeschalteter Filter oder Abscheider (beispielsweise infolge einer Beschädigung oder einer Verstopfung) nicht mehr zu einer ordnungsgemäßen Filterung in der Lage ist oder sich infolge einer Beschädigung oder Verstopfung des Filters eine unerwünschte Veränderung der Strömungsverhältnisse ergibt. Die Aktivierung der Sicherungsfunktion kann darin bestehen, dass eine Detektierung des Versagens des vorgeschalteten Filters oder Abscheiders erfolgt. Die Sicherungsfunktion kann auch darin bestehen, dass, beispielsweise bei einer Beschädigung des vorgeschalteten Filters oder Abscheiders, der Polizeifilter zumindest temporär die Filterung oder Abscheidung für den vorgeschalteten Filter oder Abscheider übernimmt. Optional möglich ist, dass (zusätzlich zu den vorgenannten Sicherungsfunktionen) der Polizeifilter auch bei ordnungsgemäßer Filterung oder Abscheidung des vorgeschalteten Filters oder Abscheiders eine Endreinigungsfunktion aufweist, so dass der Polizeifilter auch bei ordnungsgemäßem Betrieb eine Teil- oder Restfilterung übernimmt. Möglich ist, dass der Polizeifilter ein gröberes oder dasselbe Filterverhalten hat wie ein vorgeordneter Filter oder Abscheider, so dass der Polizeifilter bei ordnungsgemäßem Betrieb des vorgeordneten Filters oder Abscheiders keine Verunreinigungen zurückhält. Übernimmt der Polizeifilter auch eine Endreinigungsfunktion, kann der Polizeifilter auch eine feinere Filtercharakteristik aufweisen als der vorgeordnete Filter oder Abscheider oder der Polizeifilter kann für die Endreinigungsfunktion für die Filterung eines anderen Typs von Verunreinigungen geeignet sein als der vorgeordnete Filter oder Abscheider.

Der erfindungsgemäße Einsatz eines Polizeifilters ist dabei sowohl anwendbar, wenn innerhalb des Versorgungsleitungsstrangs zwischen der Fördereinrichtung und der mindestens einen Feldspritzeinrichtung lediglich ein Filter oder Abscheider vorhanden ist oder mehrere Filter oder Abscheider vorhanden sind, wobei im letztgenannten Fall einige oder sämtliche Filter oder Abscheider dem Polizeifilter vorgeordnet sein können.

Die Polizeifiltereinrichtung kann als verteilte Einrichtung ausgebildet sein mit einzelnen Komponenten, die dann über elektrische und/oder fluidische Leitungen miteinander verbunden sein können. Vorzugsweise ist die Polizeifiltereinrichtung als eine Polizeifiltereinheit ausgebildet, bei der die Komponenten in ein mehrteiliges Gehäuse mit entsprechenden Anschlüssen integriert sein können. Möglich ist auch, dass eine derartige Polizeifiltereinheit modular mit mehreren aneinander angeflanschten Komponenten ausgebildet ist.

Grundsätzlich können sämtliche aus dem Stand der Technik bekannten, für andere Einsatzzwecke vorgesehene Polizeifiltereinrichtungen Einsatz finden mit beliebigen Filtermaterialien, ein- oder mehrstufigen Filtern und/oder Abscheidern, Sammelkammern, druckgesteuerten Bypassleitungen u. ä. Für einen besonderen Vorschlag der Erfindung weist die Polizeifiltereinrichtung einen Eingangsdruck-Sensor und/oder einen Ausgangsdruck-Sensor und/oder einen Durchflussmesser auf. Die Signale des Eingangsdruck-Sensors, des Ausgangsdruck-Sensors und/oder des Durchflussmessers können einerseits für die genannte Sicherheitsfunktion verwendet werden, um beispielsweise zu detektieren, ob die Polizeifiltereinrichtung "angesprungen ist", womit der nicht ordnungsgemäße Betrieb des stromaufwärtigen Filters oder Abscheiders indiziert werden kann. Andererseits können die Signale des Eingangsdruck-Sensors, des Ausgangsdruck-Sensors und/oder des Durchflussmessers für eine Steuerung oder Regelung des Betriebs von Komponenten des Agrarfluid-Ausbringsystems verwendet werden. Beispielsweise kann der Durchflussmesser der Polizeifiltereinrichtung verwendet werden, um eine Steuerung des Betriebs der Fördereinrichtung zur Herbeiführung eines gewünschten Durchflusses vorzunehmen. Alternativ oder kumulativ kann auf Grundlage des Signals des Durchflussmessers eine Steuerung der Feldspritzeinrichtung erfolgen, so dass die gewünschte Ausbringmenge und das gewünschte Ausbringverhalten (Sprühkegel, Tröpfchengröße) gesteuert oder geregelt werden. Entsprechend kann auch eine Verwendung des Signals des Eingangsdruck-Sensors für die Steuerung eines Druckbegrenzungsventils und/oder den Betrieb der Fördereinrichtung und/oder eines Signals des Ausgangsdruck-Sensors für die Ansteuerung der mindestens einen Feldspritzeinrichtung verwendet werden.

Gemäß einem weiteren erfindungsgemäßen Agrarfluid-Ausbringsystem verfügt die Polizeifiltereinrichtung über einen Eingangsdruck-Sensor und einen Ausgangsdruck-Sensor. Eine elektronische Steuereinrichtung, die auch für die Steuerung oder Regelung des Betriebs der Fördereinrichtung und/oder der Feldspritzeinrichtung zuständig ist, oder eine spezifische elektronische Steuereinrichtung der Polizeifiltereinrichtung ermittelt dann eine Druckdifferenz der Signale des Eingangsdruck-Sensors und des Ausgangsdruck-Sensors. Allein oder auch auf Grundlage dieser Druckdifferenz erfolgt dann eine Überwachung, auf Grundlage welcher insbesondere der nicht ordnungsgemäße Betrieb des mindestens einen stromaufwärtigen Filters oder Abscheiders detektiert werden kann. Dieser Ausgestaltung liegt die Beobachtung zugrunde, dass die Polizeifiltereinrichtung bei dem ordnungsgemäßen Betrieb des stromaufwärtigen Filters oder Abscheiders ein definiertes Durchströmungsverhalten hat. Ist die Filtercharakteristik der Polizeifiltereinrichtung beispielsweise gröber als die des stromaufwärtigen Filters oder Abscheiders, durchströmt das agrare Fluid ohne signifikante Filterung oder Abscheidung die Polizeifiltereinrichtung mit einer sich dann ergebenen geringen Druckdifferenz. Kommt es hingegen zu einem Versagen des stromaufwärtigen Filters oder Abscheiders, gelangen (bei ordnungsgemäßem Betrieb herausgefilterte) Verunreinigungen zu der Polizeifiltereinrichtung, an der dann diese Verunreinigungen abgeschieden werden. Das Abscheiden dieser Verunreinigungen führt dann zu einer Erhöhung der Druckdifferenz, so dass die Änderung der Druckdifferenz Aufschluss gibt über die Funktion des stromaufwärtigen Filters oder Abscheiders.

Möglich ist, dass die Polizeifiltereinrichtung auch einen Durchflussmesser aufweist. Unter Umständen ist für denselben Filter- oder Abscheidegrad an der Polizeifiltereinrichtung (und damit für dasselbe Ausmaß der Beeinträchtigung des stromaufwärtigen Filters oder Abscheiders) die Druckdifferenz zwischen dem Eingangsdruck-Sensor und dem Ausgangsdruck-Sensor von dem Durchfluss durch die Polizeifiltereinrichtung abhängig. Diese Beobachtung berücksichtigt die Erfindung dadurch, dass eine Modellierung der Abhängigkeit der Druckdifferenz von dem von dem Durchflussmesser gemessenen Durchfluss erfolgt, wobei die Modellierung lediglich die genannte Abhängigkeit oder auch die Abhängigkeit von weiteren Parametern beinhalten kann.

Eine derartige Modellierung kann beispielsweise in einer mathematischen ein- oder mehrparametrigen Modellierung, einer Kurve oder einem Kennfeld bestehen. Erfolgt dann eine Überwachung, ist die Überwachung neben der Druckdifferenz zwischen dem Eingangsdruck-Sensor und dem Ausgangsdruck-Sensor auch von der Modellierung abhängig. Eine derartige Modellierung kann beispielsweise in einer Speichereinheit oder einem flüchtigen Speicher einer elektronischen Steuereinrichtung (oder der zuvor genannten Steuereinrichtung) abgelegt sein.

Das Ergebnis der Überwachung kann lediglich ein binäres Ergebnis ("stromaufwärtiger Filter oder Abscheider arbeitet ordnungsgemäß" oder "stromabwärtiger Filter oder Abscheider arbeitet nicht ordnungsgemäß") sein oder das Ergebnis der Überwachung kann eine Bewertung der Wirksamkeit des stromaufwärtigen Filters oder Abscheiders in Stufen oder stufenlos sein. Je nach Ergebnis der Überwachung und insbesondere der Zuordnung des Ergebnisses in einer der binären Stufen, einer der mehreren Stufen oder das Überschreiten eines Schwellwertes durch ein stufenloses Ergebnis kann dann mittels einer Steuerelektronik und einer darauf vorhandenen Steuerlogik eine geeignete Maßnahme getroffen werden.

Für die möglichen Maßnahmen werden im Folgenden lediglich einige die Erfindung nicht beschränkende Beispiele genannt:
- Möglich ist, dass eine Signaleinrichtung betätigt wird, bei der es sich beispielsweise um eine Anzeige eines Bildschirms, eine Warnlampe oder einen Warnton handelt. Hiermit kann einem Bediener des Agrarfluid-Ausbringsystems, beispielsweise dem Fahrer eines Traktors, signalisiert werden, dass der Filter oder Abscheider und damit das Agrarfluid-Ausbringsystem nicht ordnungsgemäß arbeitet.
- Möglich ist auch, dass die Maßnahme darin besteht, dass ein Fehlereintrag erzeugt wird. Ein derartiger Fehlereintrag kann dann zu Dokumentationszwecken dienen. Möglich ist auch, dass der Fehlereintrag von dem Hersteller des Agrarfluid-Ausbringsystems oder einer Komponente desselben herangezogen wird, um eine Beurteilung von Garantie- oder Gewährleistungsansprüchen vornehmen zu können. So kann anhand des Ergebnisses der Überwachung und des auf dieser Grundlage erfolgten Fehlereintrags auch ein Nachweis erfolgen, dass ein Betrieb des Agrarfluid-Ausbringsystems mit einem verunreinigten agraren Fluid, welches nicht den Vorgaben entspricht, erfolgt ist, womit Garantie- oder Gewährleistungsansprüche abgewehrt werden können.
- Möglich ist auch, dass eine Maßnahme darin besteht, den Betrieb der Pumpe zu regeln. Beispielsweise kann bei der Detektierung, dass kein ordnungsgemäßer Betrieb vorliegt, automatisch der Betrieb der Pumpe eingeschränkt oder beendet werden. Möglich ist aber auch, dass für den Fall, dass der Filter oder Abscheider beschädigt ist und die Sicherungsfunktion des Polizeifilters aktiviert wird, das gewünschte Ausbringverhalten eine andere Förderleistung der Pumpe erfordert, die somit auf Grundlage des Ergebnisses der Überwachung herbeigeführt werden kann.
- Auch möglich ist, dass bei der Erkennung des nicht ordnungsgemäßen Betriebs des Filters oder Abscheiders die Pumpe gezielt für die Gewährleistung eines Notbetriebs, beispielsweise mit reduzierter Ausbringung des agraren Fluids angesteuert wird.
- Möglich ist auch, dass in Abhängigkeit des Ergebnisses der Überwachung als Maßnahme eine Veränderung der Steuerung oder Regelung der Feldspritzeinrichtung erfolgt. So ist beispielsweise möglich, dass für den Fall, dass der nicht ordnungsgemäße Betrieb des stromaufwärtigen Filters oder Abscheiders erkannt wird, die Feldspritzeinrichtung in eine teilweise oder vollständige Öffnungsstellung gesteuert wird, so dass diese mit dem agraren Fluid durchspült werden kann und etwaige hier bereits angesammelte Ablagerungen der Verunreinigungen ausgespült werden können. Möglich ist aber auch, dass die Feldspritzeinrichtung bei der Detektierung des nicht ordnungsgemäßen Betriebs gezielt in eine Schließstellung gesteuert wird, um den weiteren Betrieb der Feldspritzeinrichtung und durch den weiteren Betrieb mögliche Beschädigungen zu vermeiden. Um lediglich ein weiteres Beispiel zu nennen, kann in dem Normalfall mit einem ordnungsgemäßen Betrieb das Ventil der Feldspritzeinrichtung mittels Pulsweitenmodulation betrieben werden. Hingegen kann als Maßnahme bei der Detektierung eines nicht ordnungsgemäßen Betriebs des stromaufwärtigen Filters oder Abscheiders eine Umschaltung des Betriebs des Ventils als Proportionalventil erfolgen, indem eine konstante oder lediglich gegenüber der Pulsweitenmodulation langsamere Veränderung des Öffnungsquerschnitts des Ventils herbeigeführt wird.
- Eine weitere mögliche Maßnahme ist, dass eine Betriebsstellung eines Ventils des Versorgungsleitungsstrangs und/oder Rückführleitungsstrangs verändert wird. Hierbei beschreibt der Versorgungsleitungsstrang einen fluidischen Leitungsstrang von dem Agrarfluidbehälter über die Fördereinrichtung zu mindestens einer Feldspritzeinrichtung, über die der Feldspritzeinrichtung agrares Fluid zugeführt wird zwecks Ausbringung desselben. Hingegen bezeichnet ein Rückführleitungsstrang einen fluidischen Leitungsstrang, der von der Feldspritzeinrichtung zurück zu dem Agrarfluidbehälter führt, um überschüssiges, der Feldspritzeinrichtung zugeführtes Fluid, welches nicht ausgebracht werden kann, wieder zu dem Agrarfluidbehälter zurückzuführen. Als Maßnahme kann dann beispielsweise ein Strömungsquerschnitt in einer der Leitungen, ein Drosselquerschnitt u. ä. verändert werden. Möglich ist, dass der Begrenzungsdruck eines Druckbegrenzungsventils in einer der Leitungen verändert wird. Möglich ist auch, dass ein in dem Versorgungsleitungsstrang und/oder Rückführleitungsstrang angeordnetes Ventil in eine Sperrstellung überführt wird, um den Betrieb des Agrarfluid-Ausbringsystems zu verändern oder zu beenden.
- Eine weitere mögliche Maßnahme ist, dass eine automatische Spülung der Polizeifiltereinrichtung von der Steuerlogik initiiert, beendet, gesteuert und/oder geregelt wird. Hierbei kann die Spülung beispielsweise mit Überschreiten eines Schwellwerts der überwachten Druckdifferenz erfolgen oder das Dauer und/oder das Ausmaß des Spülflusses kann von der Druckdifferenz abhängig sein. Möglich ist, dass nach der Herbeiführung eines Spülbetriebs, beispielsweise für eine vorgegebene Spüldauer und/oder einen vorgegebenen Spülfluss, die automatische Spülung der Polizeifiltereinrichtung beendet wird und dann eine erneute Ermittlung der Druckdifferenz erfolgt. Indiziert dann die Druckdifferenz, dass durch den Spülbetrieb die Polizeifiltereinrichtung hinreichend von Verunreinigungen befreit ist, kann dann der normale Betrieb ohne Spülfluss fortgesetzt werden. Andernfalls kann ein erneuter Spülbetrieb initiiert werden und/oder es können Fehlereinträge erzeugt werden, eine Veränderung des Betriebs der Pumpe und/oder der mindestens einen Feldspritzeinrichtung erfolgen oder eine Beendigung des Betriebs des Agrarfluid-Ausbringsystems ausgesteuert oder ausgeregelt werden.

Die vorgenannten Maßnahmen können
- einzeln,
- in beliebiger Anzahl und Kombination oder
- sämtlich

in dem erfindungsgemäßen Agrarfluid-Ausbringsystem zum Einsatz kommen.

Um einen Missbrauch des Agrarfluid-Ausbringsystems zu vermeiden, bei dem das Agrarfluid-Ausbringsystem ohne die Polizeifiltereinrichtung verwendet wird (um beispielsweise die Sensitivität des Agrarfluid-Ausbringsystems hinsichtlich etwaiger Verunreinigungen (unter Inkaufnahme der Beschädigungen) zu reduzieren und beispielsweise den herstellerseitig nicht gewünschten Betrieb mit Zusatz von Wasser aus einem Brunnen zu dem agraren Fluid zu ermöglichen) schlägt die Erfindung vor, dass eine elektronische Steuereinheit einen Eingangsdruck-Sensor-Anschluss, einen Ausgangsdruck-Sensor-Anschluss und/oder eine Polizeifilter-Anschluss aufweist. Für den ordnungsgemäßen Betrieb des Agrarfluid-Ausbringsystems mit einer Polizeifiltereinrichtung werden dem Eingangsdruck-Sensor-Anschluss, dem Ausgangsdruck-Sensor-Anschluss und dem Polizeifilter-Anschluss Signale der Polizeifiltereinrichtung zugeführt. Liegen diese Signale vor, erkennt eine Steuerlogik der elektronischen Steuereinheit, dass das Agrarfluid-Ausbringsystem bestimmungsgemäß mit der Polizeifiltereinrichtung betrieben wird. Liegt mindestens eines dieser Signale nicht vor, kann die Steuerlogik erkennen, dass das Agrarfluid-Ausbringsystem nicht mit einer Polizeifiltereinrichtung betrieben wird. Möglich ist auch, dass die Signale an dem jeweiligen Anschluss plausibilisiert werden und eine Bewertung derselben erfolgt, anhand welcher auch Signale simulierende Einrichtungen, die nicht der bestimmungsgemäßen Polizeifiltereinrichtung entsprechen, detektiert werden können. Wird der Betrieb ohne Polizeifiltereinrichtung oder mit einer nicht bestimmungsgemäßen anderen Einrichtung erkannt, kann eine der zuvor genannten Maßnahmen eingeleitet werden. Insbesondere erfolgt in diesem Fall ein Fehlereintrag und/oder eine Beendigung oder Stilllegung des Betriebs des Agrarfluid-Ausbringsystems.

Für einen Vorschlag der Erfindung ist die Polizeifiltereinrichtung des Agrarfluid-Ausbringsystems multifunktional, indem diese zusätzlich zur Steuerung oder Regelung des Betriebs der Feldspritzeinrichtung genutzt wird. In diesem Fall kann beispielsweise die Steuerung eines Ventils der Feldspritzeinrichtung, insbesondere die Pulsweitenmodulation, angepasst sein an den Ausgangsdruck, der von dem Ausgangsdruck-Sensor der Polizeifiltereinrichtung gemessen wird. Dieser Ausgestaltung liegt die Erkenntnis zugrunde, dass ein beispielsweise durch eine Pumpe vorgegebener Druck je nach aktuellem Betriebszustand der Leitungen und Filter abweichen kann von dem Druck an einem fluidischen Eingang der Feldspritzeinrichtung, was zu einer Abweichung des Ausbringverhaltens der Feldspritzeinrichtung von dem Soll-Ausbringverhalten führen kann. Mit dem Ausgangsdruck-Sensor kann somit möglichst dicht an der Feldspritzeinrichtung die Erfassung des tatsächlichen Ausgangsdrucks erfolgen. Das Entsprechende gilt, wenn alternativ oder kumulativ eine Steuerung oder Regelung des Betriebs der Feldspritzeinrichtung unter Berücksichtigung des Durchflusses, der von dem Durchflussmesser der Polizeifiltereinrichtung gemessen worden ist, erfolgt.

Grundsätzlich möglich ist, dass die Polizeifiltereinrichtung lediglich einen Eingangsanschluss sowie einen Ausgangsanschluss aufweist, so dass sämtliches der Polizeifiltereinrichtung zugeführtes agrares Fluid der mindestens einen Feldspritzeinrichtung zugeführt wird. Für einen besonderen Vorschlag der Erfindung weist die Polizeifiltereinrichtung neben dem Eingangsanschluss und dem Ausgangsanschluss auch einen Spülauslass auf, bei dem es sich entweder um einen Anschluss für eine in die Umgebung oder einen Behälter führende Spülleitung oder einen unmittelbaren Auslass in die Umgebung handeln kann. In diesem Fall weist die Polizeifiltereinrichtung eine Verzweigung auf, über die der Eingangsanschluss sowohl mit dem Ausgangsanschluss als auch mit dem Spülauslass verbunden ist. Ist der Spülauslass geschlossen, kann in dem Normalbetrieb das Fluid vollständig von dem Eingangsanschluss zu dem Ausgangsanschluss gelangen. Ist hingegen der Spülauslass geöffnet, wird ein Fluidteilstrom des agraren Fluids für die Spülung der Polizeifiltereinrichtung genutzt, während der andere Fluidteilstrom des agraren Fluids zu der mindestens einen Feldspritzeinrichtung gelangt und damit auf die Agrarfläche ausgebracht wird. In diesem Fall erübrigt sich ein etwaiger zusätzlicher Anschluss der Polizeifiltereinrichtung für eine zusätzliche Spülleitung.

Im Rahmen der Erfindung kann dem Spülauslass ein manuell gesteuertes Ventil vorgeordnet sein. Bei diesem Ventil kann es sich beispielsweise um einen Kugelhahn handeln. Alternativ oder zusätzlich möglich ist, dass dem Spülauslass ein elektronisch gesteuertes Ventil vorgeordnet ist. Das elektronisch gesteuerte Ventil ermöglicht auch eine automatische Ansteuerung des Ventils durch die Steuerlogik einer elektronischen Steuereinrichtung, um den Spülbetrieb automatisiert steuern oder regeln zu können.

Unter Umständen kann gewünscht sein, dass bei einem Spülbetrieb der Polizeifiltereinrichtung dennoch weiterhin das Ausbringen des agraren Fluids auf eine Agrarfläche über die mindestens eine Feldspritzeinrichtung mit dem verbleibenden Fluidteilstrom erfolgt. Da infolge der Verzweigung des Spülstromes die Durchflussmenge und/oder ein Druck an dem Ausgangsanschluss der Polizeifiltereinrichtung und damit auch an der mindestens einen Feldspritzeinrichtung verändert wird, kann sich unter Umständen das Ausbringverhalten aus der mindestens einen Feldspritzeinrichtung in unerwünschter Weise ändern. Für einen Vorschlag der Erfindung ist Steuerlogik vorhanden, welche mit der Überführung des Ventils in die Öffnungsstellung, also mit der Durchführung des Spülbetriebs, eine automatische Anpassung des Betriebs der Pumpe und/oder der mindestens einen Feldspritzeinrichtung vornimmt. Hierbei erfolgt diese Anpassung insbesondere derart, dass das Ausbringverhalten der mindestens einen Feldspritzeinrichtung unverändert bleibt oder eine Umstellung auf ein Not-Ausbringverhalten oder ein Spülbetrieb-Ausbringverhalten, welches von dem normalen Ausbringverhalten in vorbestimmter Weise abweicht, erfolgt.

Grundsätzlich möglich ist, dass die Polizeifiltereinrichtung nicht nur auf Grundlage des Eingangsdruck-Sensors, des Ausgangsdruck-Sensors und/oder des Durchflussmessers überwacht wird. Vielfältige weitere Überwachungsmöglichkeiten können im Rahmen der Erfindung Einsatz finden. So kann beispielsweise auch mittels eines elektrischen, kapazitiven, induktiven oder anderweitigen Ablagerungssensors das Ausmaß der Ablagerungen von Verunreinigungen an dem Polizeifilter erfasst werden. Möglich ist auch, dass die Ablagerungen mittels eines optischen Sensors der Polizeifiltereinrichtung erfasst und für die Überwachung berücksichtigt werden. Für einen Vorschlag der Erfindung weist (alternativ oder kumulativ) die Polizeifiltereinrichtung ein Sichtfenster auf. Das Sichtfenster ist dabei transparent. Das Schauglas ermöglicht, dass der Benutzer einen Zustand des Polizeifilters der Polizeifiltereinrichtung inspizieren kann.

Wie zuvor erläutert ist im Rahmen der Erfindung auch möglich, dass detektiert wird, ob das Agrarfluid-Ausbringsystem mit einer Polizeifiltereinrichtung oder einer Polizeifiltereinheit betrieben wird. Auch möglich ist, dass im Rahmen der Erfindung überwacht wird, ob in einer vorhandenen Polizeifiltereinrichtung oder Polizeifiltereinheit ein Polizeifilter eingesetzt wird. Hierbei ist beispielsweise möglich, dass die Ablagerungen von Verunreinigungen an einem vorhandenen Polizeifilter durch einen Anstieg der Druckdifferenz zwischen dem Eingangsdruck und dem Ausgangsdruck erkannt wird. Findet hingegen eine Polizeifiltereinrichtung ohne Polizeifilter Einsatz, kann für eine Ausgestaltung der Erfindung die drosselnde Wirkung des Polizeifilters entfallen, was dazu führen kann, dass die Druckdifferenz zwischen dem Eingangsdruck und dem Ausgangsdruck kleiner wird als ein Sollwert für einen genutzten, nicht verunreinigten Polizeifilter. Anhand eines derart detektierten Druckabfalls kann somit erkannt werden, dass die Polizeifiltereinrichtung nicht bestimmungsgemäß, d. h. ohne Polizeifilter, betrieben wird. In diesem Fall ergeben sich u. U. unterschiedliche Richtungen der Änderungen der Druckdifferenz einerseits für die Ablagerungen von Verunreinigungen an dem Polizeifilter und andererseits für den Betrieb der Polizefiltereinrichtung ohne darin angeordneten Polizeifilter. Entsprechend kann auch erkannt werden, wenn annstelle eines bestimmungsgemäßen Polizeifilters ein anderer Polizeifilter, insbesondere mit einer anderen oder gröberen Fltercharakteristik, eingesetzt wird. Schließlich ist auch möglich, dass anhand der Druckdifferenz detektiert wird, wenn der Polizeifilter einen Defekt aufweist.

Für einen besonderen Vorschlag der Erfindung sind der Strömungspfad des agraren Fluids in der Polizeifiltereinrichtung und der Polizeifilter derart gestaltet, dass sich für einen in der Polizeifiltereinrichtung angeordneten, nicht verunreinigten Polizeifilter eine kleinere Druckdifferenz zwischen dem Eingangsdruck und dem Ausgangsdruck ergibt als bei einem nicht bestimmungsgemäßen Betrieb, bei dem in der Polizeifiltereinrichtung kein Polizeifilter angeordnet ist. So kann beispielsweise bei dem in der Polizeifiltereinrichtung angeordneten Polizeifilter eine Leitung der Ströme des agraren Fluids derart erfolgen, dass sich kurze Strömungswege ohne Drosselwirkungen und Verwirbelungen ergeben, während ohne die leitende Wirkung eines Polizeifilters längere Strömungswege, erhöhte Drosselwirkungen und/oder ein erhöhtes Ausmaß von Verwirbelungen auftreten, die zu einer Druckerhöhung bei Entfall des Polizeifilters verantwortlich sind. In diesem Fall führt somit sowohl die Ablagerung von Verunreinigungen an dem Polizeifilter als auch der nicht bestimmungsgemäße Entfall des Polizeifilters zu einer Erhöhung der Druckdifferenz.

Für die konstruktive Gestaltung der Polizeifiltereinrichtung gibt es im Rahmen der Erfindung vielfältige Möglichkeiten. Für einen Vorschlag der Erfindung verfügt die Polizeifiltereinrichtung über zwei Gehäuseteile (die selber wiederum ein- oder mehrteilig ausgebildet sein können).

Ein Gehäuseteil weist dann eine elektronische Steuereinheit und/oder eine Platine und/oder mindestens einen Sensor auf. Des Weiteren verfügt das Gehäuseteil über einen elektrischen Anschluss, insbesondere für eine CAN-Bus-Leitung, oder ein elektrisches Anschlusskabel, insbesondere eine CAN-Bus-Leitung. Über die Leitung oder das Kabel kann das Gehäuseteil und damit die Polizeifiltereinrichtung mit weiteren elektrischen und elektronischen Komponenten des Agrarfluid-Ausbringsystems kommunizieren. Beispielsweise kann eine Verbindung zu einer anderen elektronischen Steuereinrichtung erfolgen und/oder eine steuernde Verbindung mit mindestens einer Feldspritzeinrichtung, der Pumpe oder anderen elektrisch gesteuerten Komponenten des Agrarfluid-Ausbringsystems erfolgen. Dieses Gehäuseteil ist dann an das andere Gehäuseteil angeflanscht.

Das andere Gehäuseteil beinhaltet den Polizeifilter. Alternativ oder kumulativ kann das andere Gehäuseteil den Eingangsanschluss, den Spülanschluss und/oder den Ausgangsanschluss aufweisen.

Vorzugsweise sind für diese Ausgestaltung die beiden Gehäuseteile spezifisch an die Funktionalitäten und die Anforderungen angepasst, indem das erstgenannte Gehäuseteil die elektrischen und elektronischen Komponenten aufweist, während das zweite Gehäuseteil die fluidischen Komponenten wie die Anschlüsse, den Filter und die Strömungskanäle für das agrare Fluid aufweist oder ausbildet.

Vorzugsweise sind die Sensoren, beispielsweise der Eingangsdruck-Sensor und der Ausgangsdruck-Sensor an der genannten Platine gehalten und diese erstrecken sich durch eine Ausnehmung oder einen Sensorkanal in einen Eingangskanal bzw. Ausgangskanal des anderen Gehäuseteils. Alternativ möglich ist, dass der Eingangskanal bzw. Ausgangskanal des anderen Gehäuseteils durch eine Ausnehmung des erstgenannten Gehäuseteils fluidisch verbunden ist mit einer Sensorfläche des jeweiligen Sensors.

Vorteilhafte Weiterbildungen der Erfindung ergeben sich aus den Patentansprüchen, der Beschreibung und den Zeichnungen.

Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen.

Hinsichtlich des Offenbarungsgehalts - nicht des Schutzbereichs - der ursprünglichen Anmeldungsunterlagen und des Patents gilt Folgendes: Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Die in den Patentansprüchen angeführten Merkmale können durch weitere Merkmale ergänzt werden oder die einzigen Merkmale sein, die der Gegenstand des jeweiligen Patentanspruchs aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand eines in der Figur dargestellten bevorzugten Ausführungsbeispiels weiter erläutert und beschrieben.
- **Fig. 1**: zeigt schematisiert eine Agrarfluid-Ausbringsystem.
- **Fig. 2**: zeigt schematisch in einem Längsschnitt eine Polizeifiltereinheit, die Einsatz finden kann in einem Agrarfluid-Ausbringsystem gemäß Fig. 1.

### FIGUREN BESCHREIBUNG

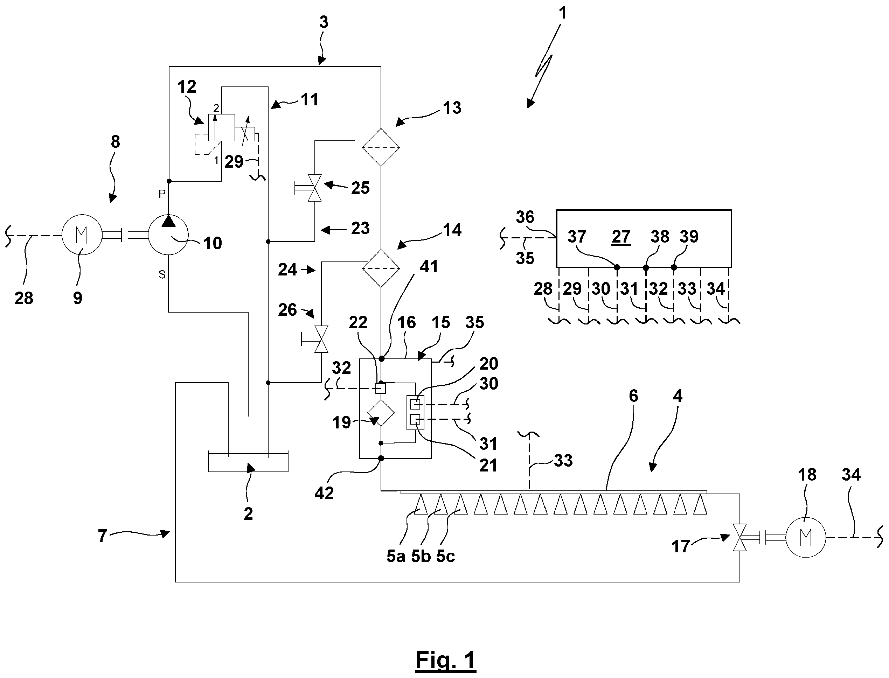

**Fig. 1** zeigt schematisch ein Agrarfluid-Ausbringsystem 1. Das Agrarfluid-Ausbringsystem 1 weist einen Agrarfluidbehälter 2 auf, in dem ein agrares Fluid bevorratet ist. Von dem Agrarfluidbehälter 2 gelangt das agrare Fluid über einen Versorgungsleitungsstrang 3 zu einer Feldspritzbaugruppe 4, die mehrere Feldspritzeinrichtungen 5a, 5 b... aufweisen kann, die an einem Sprühbalken 6 gehalten sind. Das aus dem Agrarfluidbehälter 2 über den Versorgungsleitungsstrang 3 der Feldspritzbaugruppe 4 zugeführte agrare Fluid wird über die Feldspritzbaugruppe 4 (insbesondere auf einen Ackerboden) ausgebracht, wobei temporär oder permanent das gesamte zugeführte agrare Fluid oder ein Teilstrom desselben über einen Rückführleitungsstrang 7 zu dem Agrarfluidbehälter 2 zurückgeführt sein kann.

Die Förderung des agraren Fluids erfolgt durch eine Fördereinrichtung 8, bei der es sich vorzugsweise um eine von einem Motor 9 angetriebene Pumpe 10 handelt. Die Fördereinrichtung 8 stellt das agrare Fluid mit einem erforderlichen Druck sowie Volumenstrom zur Verfügung.

Optional möglich ist, dass von dem Versorgungsleitungsstrang 3 ein Druckbegrenzungsstrang 11 mit einem Druckbegrenzungsventil 12 abzweigt. Wird der Schaltdruck des Druckbegrenzungsventils 12 überschritten, öffnet das Druckbegrenzungsventil 12 den Druckbegrenzungsstrang 11, womit eine Verbindung des Versorgungsleitungsstrangs 3 mit dem Agrarfluidbehälter 2 geschaffen wird und ein Druckanstieg über den durch das Druckbegrenzungsventil 12 vorgegebenen Schaltdruck in dem Versorgungsleitungsstrang 3 vermieden wird. Möglich ist, dass wie dargestellt der Schaltdruck des Druckbegrenzungsventils 12 elektrisch durch eine elektronische Steuereinrichtung 27 je nach Bedarf angepasst wird.

In dem Versorgungsleitungsstrang 3 sind (hinter dem Abzweig des Druckbegrenzungsstrangs 11) zwei Filter 13, 14 in Reihenschaltung angeordnet, die im Normalbetrieb die hinreichende Beseitigung von Verunreinigungen aus dem agraren Fluid gewährleisten. Hierbei können die Filter 13, 14 unterschiedliche Filtercharakteristika aufweisen, wobei beispielsweise der stromaufwärts angeordnete Filter 13 eine grobere Filtercharakteristik aufweisen kann als der stromabwärts angeordnete Filter 14.

Zwischen den Filtern 13, 14 und der Feldspritzbaugruppe 4 ist eine Polizeifiltereinrichtung 15 angeordnet, die vorzugsweise als Polizeifiltereinheit 16 ausgebildet ist.

In dem Rückführleitungsstrang 7 ist vorzugsweise ein Ventil 17 angeordnet, welches von einem von einer elektronischen Steuereinrichtung 27 angesteuerten Motor 18 betätigt sein kann, beispielsweise um einen abgestuften oder kontinuierlich veränderbaren Durchlassquerschnitt zur Verfügung zu stellen und/oder eine Öffnungs- und Schließstellung herbeizuführen.

Die Polizeifiltereinrichtung 15 weist einen Polizeifilter 19 auf, der die eingangs genannte Sicherheitsfunktion gewährleistet, während optional ergänzend mittels des Polizeifilters 19 auch eine Endreinigungsfunktion zusätzlich zu der Wirkung der Filter 13, 14 auch im Normalbetrieb bereitgestellt werden kann.

Die Polizeifiltereinrichtung 15 weist einen Eingangsdruck-Sensor 20 auf, welcher den Druck am Eingang der Polizeifiltereinrichtung 15 und stromaufwärts des Polizeifilters 19 erfasst.

Des Weiteren weist die Polizeifiltereinrichtung 15 einen Ausgangsdruck-Sensor 21 auf, der den Druck ausgangsseitig der Polizeifiltereinrichtung 15 und stromabwärts des Polizeifilters 19 erfasst.

Die Polizeifiltereinrichtung 15 weist des Weiteren einen Durchflussmesser 22 auf, der hier stromaufwärts des Polizeifilters 19 angeordnet ist, aber durchaus auch stromabwärts desselben angeordnet sein kann.

Die Signale des Eingangsdruck-Sensors 20, des Ausgangsdruck-Sensors 21 und des Durchflussmessers 22 werden an eine elektronische Steuereinrichtung 27 übermittelt, wo unter Berücksichtigung des Differenzdrucks der Signale des Eingangsdruck-Sensors 20 und des Ausgangsdruck-Sensors 21 die Ermittlung der Druckdifferenz erfolgt, auf deren Grundlage dann die Überwachung erfolgt und insbesondere die Ermittlung erfolgt, ob ein geeignetes Fluid verwendet wird und/oder die Filter 13, 14 ordnungsgemäß arbeiten. Hierzu kann ergänzend, insbesondere unter Berücksichtigung einer Modellierung oder eines Kennfelds, das Signal des Durchflussmessers 22 herangezogen werden.

Die Erfindung umfasst auch anderweitige Ausgestaltungen des Agrarfluid-Ausbringsystems. Um lediglich einige, die Erfindung nicht beschränkende Beispiele zu nennen, kann der Polizeifiltereinrichtung 15 eine beliebige Anzahl von Filtern vorgeordnet werden, also beispielsweise auch lediglich ein Filter oder mehr als zwei Filter. Möglich ist auch, dass der Versorgungsleitungsstrang 3 verzweigt in Versorgungsleitungsteilstränge 3a, 3b..., die jeweils eine Teilgruppe von Feldspritzeinrichtungen aufweisen, die für eine Teilbreitensteuerung separat angesteuert sein können. In diesem Fall kann dann die Polizeifiltereinrichtung 15 in dem Versorgungsleitungsstrang 3 vor der Verzweigung zu den Versorgungsleitungsteilsträngen 3a, 3b... angeordnet sein oder es kann eine Polizeifiltereinrichtung 15 in einem Versorgungsleitungsteilstrang 3a angeordnet sein oder in mehreren Versorgungsleitungsteilsträngen 3a, 3b kann dann jeweils eine Polizeifiltereinrichtung 15 angeordnet sein.

In Fig. 1 ist ein weiteres optionales Gestaltungsmerkmal des Agrarfluid-Ausbringsystems 1 dargestellt: Hier sind die Filter 13, 14 jeweils mit einem Spülleitungsstrang 23, 24 verbunden, die eine Spülung der Filter 13, 14 ermöglichen, wenn sich in den Filtern 13, 14 Verunreinigungen angesammelt haben. Für das dargestellte Ausführungsbeispiel zweigen die Spülleitungsstränge 23, 24 stromabwärts des Druckbegrenzungsventils 12 von dem Druckbegrenzungsstrang 11 ab. In den Spülleitungssträngen 23, 24 sind Absperrventile 25, 26 angeordnet, die für den Spülbetrieb geöffnet werden. Für das dargestellte Ausführungsbeispiel sind die Absperrventile 25, 26 als manuell betätigte Ventile ausgebildet. Durchaus möglich ist aber auch, dass die die Absperrventile 25, 26 automatisch mittels einer elektronischen Steuereinheit geöffnet, teilweise geschlossen und/oder abgesperrt werden können, wobei dies auch auf Grundlage der Überwachung durch die Polizeifiltereinrichtung 15 erfolgen kann, insbesondere mit einer automatisch durch die Steuereinrichtung 27 ausgelösten Spülung der Filter 13, 14, wenn infolge der Überwachung mittels der Polizeifiltereinrichtung 15 erkannt wird, dass mindestens ein Filter 13, 14 verstopft ist.

Hinsichtlich weiterer Ausgestaltungsmöglichkeiten des Agrarfluid-Ausbringsystems 1 (und hier insbesondere des fluidischen Kreislaufs mit dem Versorgungsleitungsstrang 3 und dem Rückführleitungsstrang 7; der Feldspritzbaugruppe 4 mit Feldspritzeinrichtungen 5a, 5b... ; der Steuerungsmaßnahmen für die Steuerung der fluidischen Bauelemente, insbesondere der Ventile der Feldspritzeinrichtungen 5a, 5b, ... und der unterschiedlichen Betriebszustände; und der Steuerungen und Regelungen wird beispielhaft verwiesen auf die Druckschriften EP 4 080 315 A1, EP 3 646 725 A1, EP 3 837 060 A1, EP 2 979 765 A1, EP 2511 783 A1 und EP 2 227 949 A1 der Anmelderin.

Sofern in dem vorliegenden Anmeldungstext eine elektronische Steuereinheit oder Steuereinrichtung erwähnt ist, kann es sich um eine einzige zentrale Steuereinheit handeln, der die Signale der Polizeifiltereinrichtung 15 zugeführt werden und die für die elektronische Steuerung oder Regelung der Komponenten (insbesondere des Motors 9 der Pumpe 10, des Druckbegrenzungsventils 12, der Ventile der Feldspritzeinrichtungen 5a, 5b, ... sowie des Motors 18 des Ventils 17) zuständig ist. Möglich ist aber auch, dass die Verarbeitung von Signalen und die Steuerung oder Regelung der genannten Komponenten durch einzelne elektronische Steuereinrichtungen oder -einheiten erfolgt, die dann voneinander unabhängig sein können oder miteinander vernetzt sein können. Insbesondere möglich ist, dass die Polizeifiltereinheit 16 eine integrierte elektronische Steuereinheit aufweist, die das Ergebnis der Überwachung als ein Signal ausgibt und an eine andere elektronische Steuereinheit überträgt, die dann für die Steuerung der weiteren Komponenten des Agrarfluid-Ausbringsystems 1 zuständig ist.

In Fig. 1 ist beispielhaft eine einzige elektronische Steuereinrichtung 27 dargestellt, die zur Signalübertragung und Steuerung oder Regelung über Leitungen 28 bis 34 mit dem Motor 9, dem Druckbegrenzungsventil 12, dem Eingangsdruck-Sensor 20, dem Ausgangsdruck-Sensor 21, dem Durchflussmesser 22, den Feldspritzeinrichtungen 5a, 5b, ... und dem Motor 18 verbunden ist.

Für den Fall, dass die Polizeifiltereinrichtung 15 als Polizeifiltereinheit 16 ausgebildet ist, kann die Polizeifiltereinheit 16 über eine Leitung 35 mit einem Polizeifilter-Anschluss 36 der elektronischen Steuereinrichtung 27 verbunden sein. Hingegen erfolgt eine Übertragung des Signals des Eingangsdruck-Sensors 20 über die Leitung 30 an einen Eingangsdruck-Sensor-Anschluss 37 der Steuereinrichtung 27, des Signals des Ausgangsdruck-Sensors 21 über die Leitung 31 an einen Ausgangsdruck-Sensor-Anschluss 38 der Steuereinrichtung 27 und des Durchflussmessers 22 über die Leitung 32 an einen Durchflussmesser-Anschluss 39 der Steuereinrichtung 27.

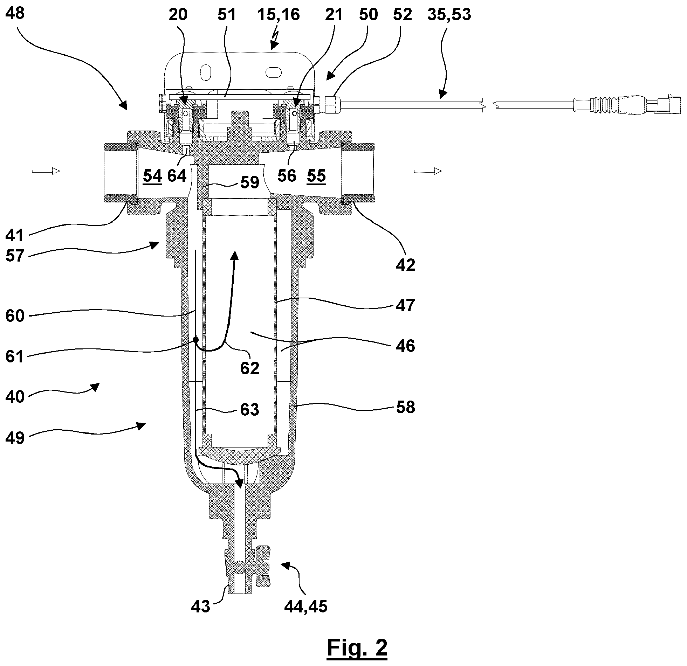

**Fig. 2** zeigt eine beispielhafte Ausgestaltung einer Polizeifiltereinheit 16, die Einsatz finden kann in dem Agrarfluid-Ausbringsystem 1 gemäß Fig. 1. Die Polizeifiltereinheit 16 weist ein Gehäuseteil 40 auf, welches die fluidischen Komponenten aufweist oder ausbildet. Das Gehäuseteil 40 verfügt über einen Eingangsanschluss 41, dem das agrare Fluid von den Filtern 13, 14 zugeführt wird. Das Gehäuseteil 40 verfügt des Weiteren über einen Ausgangsanschluss 42, von dem das agrare Fluid zu der Feldspritzbaugruppe 4 gelangt. Des Weiteren weist das Gehäuseteil 40 einen Spülauslass 43 auf, über welchen ein Fluidteilstrom des agraren Fluids in einem Spülbetrieb unmittelbar auf die Agrarfläche austreten kann oder in einen Spülbehälter gelangt. Dem Spülauslass 43 ist ein Ventil 44 vorgeordnet. Für das dargestellte Ausführungsbeispiel ist das Ventil 44 als Kugelhahnventil 45 ausgebildet, wobei aber auch ein beliebiges anderes manuell betätigbares Ventil oder auch ein elektrisch angesteuertes Ventil Einsatz finden kann.

Der Eingangsanschluss 41 und der Ausgangsanschluss 42 münden in einen Innenraum 46 des Gehäuseteils 40. In dem Innenraum 46 ist ein Polizeifilter 47 angeordnet. Der Polizeifilter 47 trennt (mit der filternden Durchlasswirkung) den Eingangsanschluss 41 von dem Ausgangsanschluss 42, ohne dass ein Bypass des Polizeifilters 47 für das agrare Fluid möglich ist. Für das dargestellte Ausführungsbeispiel ist der Innenraum 46 zylindrisch ausgebildet, ggf. mit leicht kegeliger Mantelfläche. Der Polizeifilter 47 ist hülsen- oder hohlzylinderförmig ausgebildet und konzentrisch zu dem Innenraum 46 angeordnet. Ein hohlzylinderförmiger Ringraum, der radial innen von dem Polizeifilter 47 begrenzt ist und radial außen durch eine Wandung des Gehäuseteils 40 begrenzt ist, ermöglicht die Beaufschlagung der gesamten zylindrischen Mantelfläche des Polizeifilters 47 mit einem Fluidteilstrom 62 des über den Eingangsanschluss 41 bereitgestellten agraren Fluids. Nach dem Durchtritt des Fluidteilstroms 62 durch den Polizeifilter 47 erfolgt die weitere Strömung zu dem Ausgangsanschluss 42.

Für das dargestellte Ausführungsbeispiel ist (ohne dass dies zeichnerisch in Fig. 2 dargestellt ist) das Gehäuseteil 40 zweiteilig ausgebildet mit einem Oberteil 48 und einem Unterteil 49. Das Oberteil 48 bildet dabei den Eingangsanschluss 41 und den Ausgangsanschluss 42 aus. Das Unterteil 49 begrenzt den den Polizeifilter 47 aufnehmenden Innenraum 46 in radialer Richtung sowie nach unten. Das Unterteil 49 bildet den Spülauslass 43 aus und verfügt über das Ventil 44. Der Polizeifilter 47 ist in Richtung der Längsachse desselben zwischen dem Oberteil 48 und dem Unterteil 49 (unter Abdichtung der kontaktierenden Stirnseiten) verspannt und somit fixiert.

An das Gehäuseteil 40 ist ein anderes Gehäuseteil 50 angeflanscht. Das andere Gehäuseteil 50 weist insbesondere die elektrischen und elektronischen Komponenten der Polizeifiltereinheit 16 auf. Das Gehäuseteil 50 beinhaltet eine Platine 51, die den Eingangsdruck-Sensor 20 und den Ausgangsdruck-Sensor 21 trägt oder mit diesen verbunden ist. Auf der Platine 51 befindet sich auch eine elektronische Steuereinrichtung, die über eine Leitung 35 mit einer anderen oder der zentralen Steuereinheit 27 kommunizieren kann. Das Gehäuseteil 50 verfügt des Weiteren über einen elektrischen Anschluss 52, an welchen ein elektrisches Anschlusskabel 53 angeschlossen ist, welches die Leitung 35 in Fig. 1 bilden kann. Über den elektrischen Anschluss 52 und das elektrische Anschlusskabel 53 kommuniziert die Platine 51 und/oder die elektronische Steuereinheit der Polizeifiltereinheit 16 mit weiteren Komponenten des Agrarfluid-Ausbringsystems 1.

Für das dargestellte Ausführungsbeispiel verfügt ein Eingangskanal 54, der an den Eingangsanschluss 41 anschließt und stromaufwärts des Polizeifilters 47 angeordnet ist, über eine in das Gehäuseteil 50 führende Ausnehmung 64, die durch den Eingangsdruck-Sensor 20 mit dessen Sensorfläche verschlossen ist.

In entsprechender Weise verfügt das Gehäuseteil 40 über einen Ausgangskanal 55, der stromabwärts des Polizeifilters 47 angeordnet ist und dem Ausgangsanschluss 42 vorgeordnet ist. Der Ausgangskanal 55 verfügt über eine Ausnehmung 56, die in das Gehäuseteil 50 mündet und durch den Ausgangsdruck-Sensor 21 im Bereich seiner Sensorfläche verschlossen ist.

Auf diese Weise kann der Eingangsdruck-Sensor 20 den Eingangsdruck in dem Eingangskanal 54 und der Ausgangsdruck-Sensor 21 den Ausgangsdruck in dem Ausgangskanal 55 sensieren.

Möglich ist, dass das Oberteil 48 und das Unterteil 49 des Gehäuseteils 50 mittels einer Schraubverbindung 57, die in Fig. 2 lediglich schematisch mit einer Verdickung dargestellt ist, miteinander verschraubt sind. Wird das Unterteil 49 von dem Oberteil 48 abgeschraubt, kann ein Austausch des Polizeifilters 47 erfolgen. Mit dem Verschrauben der Schraubverbindung 57 kann ein Einspannen des Polizeifilters 47 zwischen dem Oberteil 48 und dem Unterteil 49 erfolgen.

Möglich ist, dass das Unterteil 49 ein Sichtfenster 58 aufweist, durch welches der Benutzer den Zustand des Polizeifilters 47 inspizieren kann und je nach Verschmutzungsgrad einen Austausch desselben vornehmen kann. Möglich ist, dass das Sichtfenster 58 lediglich ein Teilbereich des ansonsten aus einem nicht transparenten Material hergestellten Gehäuseteils 40 bzw. des Unterteils 49 darstellt. Möglich ist aber auch, dass das gesamte Unterteil 49 aus einem transparenten Material hergestellt ist.

Für das dargestellte Ausführungsbeispiel ist geneigt oder ungefähr vertikal zu der Strömungsrichtung des agraren Fluids in dem Eingangskanal 54 eine Prall-, Umlenk- oder Labyrinthplatte 59 angeordnet, die hier von dem Oberteil 48 ausgebildet ist und an dessen Endbereich der Polizeifilter 47 abgestützt sein kann. Möglich ist, dass die Gestaltung der Führungsflächen für das agrare Fluid und insbesondere einer Führungsfläche der Prall-, Umlenk-oder Labyrinthplatte 59 derart konstruktiv vorgegeben ist, dass sich bei einem nicht verunreinigten Polizeifilter 47 ein kleinere Differenzdruck zwischen dem Eingangsdruck und dem Ausgangsdruck ergibt, während sich ohne den Polizeifilter 47 eine größere Druckdifferenz ergibt, beispielsweise infolge einer sich dann an der Prall-, Umlenk- oder Labyrinthplatte 59 ausbildenden Verwirbelung. Die Prall-, Umlenk- oder Labyrinthplatte 59 ist hierbei in Fig. 2 lediglich vereinfacht und schematisch dargestellt. Mit dem angestrebten Ziel der Erzeugung einer Druckerhöhung ohne Einsatz des Polizeifilters 47 kann der Fachmann anderweitige Formgebungen der Prall-, Umlenk- oder Labyrinthplatte 59 und anderer die Strömung führender Flächen des Gehäuseteils 40 wählen.

Ist das Ventil 44 geöffnet, wird ein Fluidstrom 60, der der Polizeifiltereinheit 16 über den Eingangsanschluss 41 zugeführt wird, über eine Verzweigung 61 aufgeteilt in einen Fluidteilstrom 62, der durch den Polizeifilter 47 zu dem Ausgangsanschluss 42 gelangt, und einen Fluidteilstrom 63, der zu dem Spülauslass 43 gelangt.

Signalisiert die Polizeifiltereinheit 16 oder die Auswertung der Signale derselben, dass die Filter 13, 14 nicht ordnungsgemäß arbeiten, kann ein Abbruch des Betriebs des Agrarfluid-Ausbringsystems 1 erfolgen. Möglich ist aber auch, dass dann ein weiterer Betrieb erfolgt. In dem weiteren Betrieb kann, ggf. unter Veränderung der Förderrate der Pumpe 10 und/oder des Betriebs der mindestens einen Feldspritzeinrichtung 5, eine möglichst unveränderte Ausbringung des agraren Fluids aus den Feldspritzeinrichtungen 5 erfolgen, wobei dann eine Filterung durch den Polizeifilter 47 erfolgen oder einsetzen kann. Möglich ist aber auch, dass dann ein dauerhafter oder zeitlich beschränkter Notbetrieb erfolgt, in dem (unter Nutzung einer Filterwirkung durch den Polizeifilter 47) eine veränderte Ausbringung des agraren Fluids durch die Feldspritzeinrichtung, beispielsweise mit einem verringerten Ausbringdurchfluss, einem veränderten Sprühkegel oder einer veränderten Tropfengröße, erfolgt, wobei dann die Betriebsparameter der Pumpe 10 und/oder der Feldspritzeinrichtungen 5 unverändert bleiben können oder gezielt für den Notbetrieb durch eine elektronische Steuereinrichtung verändert werden können.

### BEZUGSZEICHENLISTE

- 1: Agrarfluid-Ausbringsystem
- 2: Agrarfluidbehälter
- 3: Versorgungsleitungsstrang
- 4: Feldspritzbaugruppe
- 5: Feldspritzeinrichtung
- 6: Sprühbalken
- 7: Rückführleitungsstrang
- 8: Fördereinrichtung
- 9: Motor
- 10: Pumpe
- 11: Druckbegrenzungsstrang
- 12: Druckbegrenzungsventil
- 13: Filter
- 14: Filter
- 15: Polizeifiltereinrichtung
- 16: Polizeifiltereinheit
- 17: Ventil
- 18: Motor
- 19: Polizeifilter
- 20: Eingangsdruck-Sensor
- 21: Ausgangsdruck-Sensor
- 22: Durchflussmesser
- 23: Spülleitungsstrang
- 24: Spülleitungsstrang
- 25: Absperrventil
- 26: Absperrventil
- 27: elektronische Steuereinrichtung
- 28: Leitung
- 29: Leitung
- 30: Leitung
- 31: Leitung
- 32: Leitung
- 33: Leitung
- 34: Leitung
- 35: Leitung
- 36: Polizeifilter-Anschluss
- 37: Eingangsdruck-Sensor-Anschluss
- 38: Ausgangsdruck-Sensor-Anschluss
- 39: Durchflussmesser-Anschluss
- 40: Gehäuseteil
- 41: Eingangsanschluss
- 42: Ausgangsanschluss
- 43: Spülauslass
- 44: Ventil
- 45: Kugelhahnventil
- 46: Innenraum
- 47: Polizeifilter
- 48: Oberteil
- 49: Unterteil
- 50: Gehäuseteil
- 51: Platine
- 52: elektrischer Anschluss
- 53: elektrisches Anschlusskabel
- 54: Eingangskanal
- 55: Ausgangskanal
- 56: Ausnehmung
- 57: Schraubverbindung
- 58: Sichtfenster
- 59: Prall-, Umlenk- oder Labyrinthplatte
- 60: Fluidstrom
- 61: Verzweigung
- 62: Fluidteilstrom
- 63: Fluidteilstrom
- 64: Ausnehmung

## Patentansprüche

1. Agrarfluid-Ausbringsystem (1) mit einem Agrarfluidbehälter (2), der über eine Fördereinrichtung (8) und mindestens einen Filter (13, 14) und/oder Abscheider mit mindestens einer Feldspritzeinrichtung (5), über die ein agrares Fluid auf eine Agrarfläche ausbringbar ist, verbunden ist, und mit einer elektronischen Steuereinrichtung (27), welche den Betrieb der Fördereinrichtung (8) und/oder der mindestens einen Feldspritzeinrichtung (5) steuert oder regelt, **dadurch gekennzeichnet, dass** zwischen dem Filter (13, 14) und/oder Abscheider und der mindestens einen Feldspritzeinrichtung (5) eine Polizeifiltereinrichtung (15) angeordnet ist.

2. Agrarfluid-Ausbringsystem (1) nach Anspruch 1, **dadurch gekennzeichnet, dass** die Polizeifiltereinrichtung (15)
a) einen Eingangsdruck-Sensor (20) und/oder einen Ausgangsdruck-Sensor (21) und/oder
b) einen Durchflussmesser (22) aufweist.

3. Agrarfluid-Ausbringsystem (1) nach Anspruch 1, **dadurch gekennzeichnet, dass** die Polizeifiltereinrichtung (15) einen Eingangsdruck-Sensor (20) und einen Ausgangsdruck-Sensor (21) aufweist und die oder eine elektronische Steuereinrichtung (27) eine Überwachung auf Grundlage einer Druckdifferenz zwischen dem von dem Eingangsdruck-Sensor (20) gemessenen Eingangsdruck und dem von dem Ausgangsdruck-Sensor (21) gemessenen Ausgangsdruck durchführt.

4. Agrarfluid-Ausbringsystem (1) nach Anspruch 1, **dadurch gekennzeichnet, dass** die Polizeifiltereinrichtung (15) einen Eingangsdruck-Sensor (20), einen Ausgangsdruck-Sensor (21) und einen Durchflussmesser (22) aufweist und die oder eine elektronische Steuereinrichtung (27) eine Überwachung auf Grundlage
a) einer Druckdifferenz zwischen dem von dem Eingangsdruck-Sensor (20) gemessenen Eingangsdruck und dem von dem Ausgangsdruck-Sensor (21) gemessenen Eingangsdruck sowie
b) einer Modellierung einer Abhängigkeit der Druckdifferenz und des von dem Durchflussmesser (22) gemessenen Durchflusses
durchführt.

5. Agrarfluid-Ausbringsystem (1) nach einem der vorhergehenden Ansprüche, **dadurch gekennzeichnet, dass** Steuerlogik vorhanden ist, welche in Abhängigkeit des Ergebnisses einer Überwachung
a) eine Signaleinrichtung betätigt und/oder
b) einen Fehlereintrag erzeugt und/oder
c) den Betrieb einer Pumpe (10) und/oder der mindestens einen Feldspritzeinrichtung (5) steuert oder regelt und/oder
d) eine Betriebsstellung eines Ventils (17) eines Versorgungsleitungsstrangs und/oder Rückführleitungsstrangs steuert oder regelt und/oder
e) eine automatische Spülung der Polizeifiltereinrichtung (15) steuert oder regelt.

6. Agrarfluid-Ausbringsystem (1) nach einem der Ansprüche 2 bis 5, **dadurch gekennzeichnet, dass** Steuerlogik vorhanden ist, welche anhand
a) eines Signals an einem Eingangsdruck-Sensor-Anschluss (37) und/oder
b) eines Signals an einem Ausgangsdruck-Sensor-Anschluss (38) und/oder
c) eines Signals an einem Polizeifilter-Anschluss (36)
detektiert, ob das Agrarfluid-Ausbringsystem (1) mit einer Polizeifiltereinrichtung (15) betrieben wird.

7. Agrarfluid-Ausbringsystem (1) nach einem der Ansprüche 2 bis 6, **dadurch gekennzeichnet, dass** Steuerlogik vorhanden ist, welche unter Berücksichtigung
a) des an dem Ausgangsdruck-Sensor (21) gemessenen Ausgangsdrucks und/oder
b) des von dem Durchflussmesser (22) gemessenen Durchflusses
den Betrieb der Feldspritzeinrichtung (5) steuert oder regelt.

8. Agrarfluid-Ausbringsystem (1) nach einem der vorhergehenden Ansprüche, **dadurch gekennzeichnet, dass** die Polizeifiltereinrichtung (15) eine Verzweigung (61) aufweist, über die ein Eingangsanschluss (41) der Polizeifiltereinrichtung (15) sowohl mit einem mit der Feldspritzeinrichtung (5) verbundenen Ausgangsanschluss (42) als auch mit einem Spülauslass (43) verbunden ist.

9. Agrarfluid-Ausbringsystem (1) nach Anspruch 8, **dadurch gekennzeichnet, dass** dem Spülauslass (43) ein elektronisch und/oder manuell gesteuertes Ventil (44) vorgeordnet ist.

10. Agrarfluid-Ausbringsystem (1) nach Anspruch 9, **dadurch gekennzeichnet, dass** Steuerlogik vorhanden ist, welche (insbesondere in Abhängigkeit des Ergebnisses der Überwachung) das dem Spülauslass (43) vorgeordnete Ventil (44) in eine Öffnungsstellung überführt.

11. Agrarfluid-Ausbringsystem (1) nach Anspruch 10, **dadurch gekennzeichnet, dass** Steuerlogik vorhanden ist, welche mit der Überführung des Ventils (44) in die Öffnungsstellung eine Anpassung des Betriebs der Pumpe (10) und/oder der mindestens einen Feldspritzeinrichtung (5) vornimmt.

12. Agrarfluid-Ausbringsystem (1) nach einem der vorhergehenden Ansprüche, **dadurch gekennzeichnet, dass** die Polizeifiltereinrichtung (15) ein Sichtfenster (58) aufweist, über welches der Benutzer einen Zustand des Polizeifilters (47) der Polizeifiltereinrichtung (15) inspizieren kann.

13. Agrarfluid-Ausbringsystem (1) nach einem der vorhergehenden Ansprüche, **dadurch gekennzeichnet, dass** der Strömungspfad des agraren Fluids in der Polizeifiltereinrichtung (15) und der Polizeifilter (47) derart gestaltet sind, dass sich für einen in der Polizeifiltereinrichtung (15) angeordneten, nicht verunreinigten Polizeifilter (47) eine kleinere Druckdifferenz zwischen dem von einem oder dem Eingangsdruck-Sensor (20) gemessenen Eingangsdruck und von einem oder dem Ausgangsdruck-Sensor (21) gemessenen Ausgangsdruck ergibt als ohne einen in der Polizeifiltereinrichtung (15) angeordneten Polizeifilter (47).

14. Agrarfluid-Ausbringsystem (1) nach einem der vorhergehenden Ansprüche, **dadurch gekennzeichnet, dass** die Polizeifiltereinrichtung (15) ein Gehäuseteil (50) aufweist, welches
a) eine elektronische Steuereinheit, eine Platine (51) und/oder mindestens einen Sensor aufweist,
b) einen elektrischen Anschluss (52), insbesondere für eine CAN-BUS-Leitung, oder ein elektrisches Anschlusskabel (53), insbesondere eine CAN-BUS-Leitung, aufweist und
c) an ein Gehäuseteil (40) angeflanscht ist, welches den Polizeifilter (47) beinhaltet und/oder den Eingangsanschluss (41), den Spülanschluss (43) und/oder den Ausgangsanschluss (42) aufweist.

## Claims

1. Agricultural fluid discharge system (1) comprising an agricultural fluid reservoir (2) which is connected via a conveying device (8) and at least one filter (13, 14) and/or separator to at least one field spraying device (5) by which an agricultural fluid can be discharged on an agricultural area, and with an electronic control device (27) which controls (open-loop control or closed-loop control) the operation of the conveying device (8) and/or the at least one field spraying device (5), **characterised in that** a control filter device (15) is arranged between the filter (13, 14) and/or separator and the at least one field spraying device (5).

2. Agricultural fluid discharge system (1) of claim 1, **characterised in that** the control filter device (15) comprises
a) an inlet pressure sensor (20) and/or an outlet pressure sensor (21) and/or
b) a flowmeter (22).

3. Agricultural fluid discharge system (1) of claim 1, **characterised in that** the control filter device (15) comprises an inlet pressure sensor (20) and an outlet pressure sensor (21) and the or an electronic control device (27) provides a control or monitoring on the basis of a pressure difference between the inlet pressure sensed by the inlet pressure sensor (20) and the outlet pressure sensed by the outlet pressure sensor (21).

4. Agricultural fluid discharge system (1) of claim 1, **characterised in that** the control filter device (15) comprises an inlet pressure sensor (20), an outlet pressure sensor (21) and a flowmeter (22) and the or an electronic control device (27) provides the control or monitoring on the basis of
a) a pressure difference between the inlet pressure sensed by the inlet pressure sensor (20) and the inlet pressure sensed by the outlet pressure sensor (21) as well as
b) a model of a dependency of the pressure difference and the flow sensed by the flowmeter (22).

5. Agricultural fluid discharge system (1) of one of the preceding claims, **characterised in that** control logic is provided which
a) actuates a signalling device and/or
b) generates an error entry and/or
c) controls (open-loop control or closed-loop control) the operation of a pump (10) and/or of at least one field spraying device (5) and/or
d) controls (open-loop control or closed-loop control) an operation position of a valve (17) in a supply line branch and/or a return line branch and/or
e) controls (open-loop control or closed-loop control) an automatic flushing of the control filter device (15)
dependent on the result of the control or monitoring.

6. Agricultural fluid discharge system (1) of one of claims 2 to 5, **characterised in that** control logic is provided which on the basis of
a) a signal at an inlet pressure sensor port (37) and/or
b) a signal at an outlet pressure sensor port (38) and/or
c) a signal at a control filter port (36)
detects if the agricultural fluid discharge system (1) is operated with a control filter device (15).

7. Agricultural fluid discharge system (1) of one of claims 2 to 6, **characterised in that** control logic is provided which under consideration of
a) the outlet pressure sensed by the outlet pressure sensor (21) and/or
b) the flow sensed by the flowmeter (22)
controls (open-loop control or closed-loop control) the operation of the field spraying device (5).

8. Agricultural fluid discharge system (1) of one of the preceding claims, **characterised in that** the control filter device (15) comprises a branching (61) by which the inlet port (41) of the control filter device (15) is connected both to an outlet port (42) connected to the field spraying device (5) as well as to a flushing outlet (43).

9. Agricultural fluid discharge system (1) of claim 8, **characterised in that** an electronically and/or manually controlled valve (44) is arranged upstream from the flushing outlet (43).

10. Agricultural fluid discharge system (1) of claim 9, **characterised in that** control logic is provided which (in particular dependent on the result of the monitoring) transfers the valve (44) being arranged upstream from the flushing outlet (43) into an open position.

11. Agricultural fluid discharge system (1) of claim 10, **characterised in that** control logic is provided which adjusts the operation of the pump (10) and/or of the at least one field spraying device (5) together with the transfer of the valve (44) into the open position.

12. Agricultural fluid discharge system (1) of one of the preceding claims, **characterised in that** the control filter device (15) comprises an inspection window (58) by which the user is able to inspect a state of the control filter (47) of the control filter device (15).

13. Agricultural fluid discharge system (1) of one of the preceding claims, **characterised in that** the streaming path of the agricultural fluid in the control filter device (15) and the control filter (47) is designed such that in the case that the control filter (47) arranged in the control filter device (15) is not impurified there is a smaller pressure difference between the inlet pressure sensed by an or the inlet pressure sensor (20) and the outlet pressure sensed by an or the outlet pressure sensor (21) than in the case that there is no control filter (47) arranged in the control filter device (15).

14. Agricultural fluid discharge system (1) of one of the preceding claims, **characterised in that** the control filter device (15) comprises a housing part (50) which
a) comprises an electronic control unit, a printed circuit board (51) and/or at least one sensor,
b) comprises an electric port (52), in particular for a CAN-BUS-line, or an electric connection cable (53), in particular a CAN-BUS-line, and
c) is flanged to a housing part (50) which contains the control filter (47) and/or comprises the inlet port (41), the flushing port (43) and/or the outlet port (42).

## Revendications

1. Système d'épandage de fluide agricole (1) comprenant un réservoir de fluide agricole (2) qui est relié, par l'intermédiaire d'un dispositif de transport (8) et d'au moins un filtre (13, 14) et/ou séparateur, à un ou plusieurs dispositifs de pulvérisation (5) permettant d'épandre un fluide agricole sur une surface agricole, et à un dispositif de commande électronique (27) qui commande ou régule le fonctionnement du dispositif de transport (8) et/ou du ou des dispositifs de pulvérisation agricole (5), **caractérisé en ce qu'**un dispositif de filtre de police (15) est agencé entre le filtre (13, 14) et/ou le séparateur et le ou les dispositif(s) de pulvérisation (5).

2. Système d'épandage de fluide agricole (1) selon la revendication 1, **caractérisé en ce que** le dispositif de filtre de police (15)
a) présente un capteur de pression d'entrée (20) et/ou un capteur de pression de sortie (21) et/ou
b) un débitmètre (22).

3. Système d'épandage de fluide agricole (1) selon la revendication 1, **caractérisé en ce que** le dispositif de filtre de police (15) présente un capteur de pression d'entrée (20) et un capteur de pression de sortie (21) et le ou un dispositif de commande électronique (27) effectue une surveillance sur la base d'une différence de pression entre la pression d'entrée mesurée par le capteur de pression d'entrée (20) et la pression de sortie mesurée par le capteur de pression de sortie (21).

4. Système d'épandage de fluide agricole (1) selon la revendication 1, **caractérisé en ce que** le dispositif de filtre de police (15) présente un capteur de pression d'entrée (20), un capteur de pression de sortie (21) et un débitmètre (22) et le ou un dispositif de commande électronique (27) effectue une surveillance sur la base
a) d'une différence de pression entre la pression d'entrée mesurée par le capteur de pression d'entrée (20) et la pression d'entrée mesurée par le capteur de pression de sortie (21) ainsi que
b) d'une modélisation d'une dépendance entre la différence de pression et le débit mesuré par le débitmètre (22).

5. Système d'épandage de fluide agricole (1) selon l'une des revendications précédentes, **caractérisé en ce qu'**il existe une logique de commande qui, en fonction du résultat d'une surveillance,
a) actionne un dispositif de signalisation et/ou
b) génère une entrée d'erreur et/ou
c) commande ou régule le fonctionnement d'une pompe (10) et/ou du ou des dispositifs de pulvérisation agricole (5) et/ou
d) commande ou régule la position de service d'une vanne (17) d'une conduite d'alimentation et/ou d'une conduite de retour et/ou
e) commande ou régule le rinçage automatique du dispositif de filtre de police (15).

6. Système d'épandage de fluide agricole (1) selon l'une des revendications 2 à 5, **caractérisé en ce qu'**il existe une logique de commande qui, à l'aide
a) d'un signal sur un raccord de capteur de pression d'entrée (37) et/ou
b) d'un signal sur un raccord de capteur de pression de sortie (38) et/ou
c) d'un signal sur un raccord de filtre de police (36),
détecte si le système d'épandage de fluide agricole (1) fonctionne avec un dispositif de filtre de police (15).

7. Système d'épandage de fluide agricole (1) selon l'une des revendications 2 à 6, **caractérisé en ce qu'**il comprend une logique de commande qui, en tenant compte
a) de la pression de sortie mesurée au niveau du capteur de pression de sortie (21) et/ou
b) du débit mesuré par le débitmètre (22), commande ou régule le fonctionnement du dispositif de pulvérisation agricole (5).

8. Système d'épandage de fluide agricole (1) selon l'une des revendications précédentes, **caractérisé en ce que** le dispositif de filtre de police (15) présente une dérivation (61) par laquelle un raccord d'entrée (41) du dispositif de filtre de police (15) est relié à la fois à un raccord de sortie (42) relié au dispositif de pulvérisation agricole (5) et à une sortie de rinçage (43).

9. Système d'épandage de fluide agricole (1) selon la revendication 8, **caractérisé en ce qu'**une vanne (44) à commande électronique et/ou manuelle est disposée en amont de la sortie de rinçage (43).

10. Système d'épandage de fluide agricole (1) selon la revendication 9, **caractérisé en ce qu'**il comprend une logique de commande qui (en particulier en fonction du résultat de la surveillance) amène la vanne (44) disposée en amont de la sortie de rinçage (43) dans une position d'ouverture.

11. Système d'épandage de fluide agricole (1) selon la revendication 10, **caractérisé en ce qu'**il comprend une logique de commande qui, lors du passage de la vanne (44) en position d'ouverture, procède à une adaptation du fonctionnement de la pompe (10) et/ou du ou des dispositifs de pulvérisation (5).

12. Système d'épandage de fluide agricole (1) selon l'une des revendications précédentes, **caractérisé en ce que** le dispositif de filtre de police (15) présente une fenêtre de visualisation (58) à travers laquelle l'utilisateur peut inspecter l'état du filtre de police (47) du dispositif de filtre de police (15).

13. Système d'épandage de fluide agricole (1) selon l'une des revendications précédentes, **caractérisé en ce que** le trajet d'écoulement du fluide agricole dans le dispositif de filtre de police (15) et le filtre de police (47) sont conçus de telle sorte que, pour un filtre de police (47) non contaminé agencé dans le dispositif de filtre de police (15), une différence de pression plus faible entre la pression d'entrée mesurée par un ou le capteur de pression d'entrée (20) et la pression de sortie mesurée par un ou le capteur de pression de sortie (21) est inférieure à celle obtenue sans filtre de police (47) agencé dans le dispositif de filtre de police (15).

14. Système d'épandage de fluide agricole (1) selon l'une des revendications précédentes, **caractérisé en ce que** le dispositif de filtre de police (15) présente une partie de boîtier (50) qui
a) présente une unité de commande électronique, un circuit imprimé (51) et/ou au moins un capteur,
b) un raccord électrique (52), en particulier pour une ligne CAN-BUS, ou un câble de raccord électrique (53), en particulier un câble CAN-BUS, et
c) est bridée sur une partie de boîtier (40) qui contient le filtre de police (47) et/ou présente le raccord d'entrée (41), le raccord de rinçage (43) et/ou le raccord de sortie (42).
